# EUROPEAN PATENT APPLICATION

(11) **EP 3 306 583 A1**
(43) Date of publication of application: **11.04.2018**
(21) Application number: 16799173.6
(22) Date of filing: 22.04.2016
(51) Int. Cl.: G07F 11/70

(54) **INTELLIGENT FOOD COOKING MACHINE**

(30) Priority: 28.05.2015 CN 201510284173
(71) Applicant: Wang, Aiqun, Wenzhou, Zhejiang 325000 (CN)
(72) Inventor: Wang, Aiqun, Wenzhou, Zhejiang 325000 (CN)
(74) Representative: Cabinet Chaillot
(86) International application number: PCT/CN2016/080044
(87) International publication number: WO 2016/188284

(57) **Abstract**

The present invention discloses an intelligent food cooking machine that integrates a coin device and a change return device and separates a bowl with food from a bowl storage mechanism by using a separation and fetching mechanism. A push mechanism pushes a bowl to a microwave heating mechanism for heating processing. After heating is completed, the push mechanism pushes the bowl to a delivery lifting mechanism, and then the delivery lifting mechanism delivers the bowl to a bowl dispenser opening. In this way, an intelligent food heating and selling process is implemented.

## Description

### FIELD OF THE INVENTION

The present invention relates to the field of food retail equipment, and more specifically, to an intelligent food cooking machine for cooking fresh foods such as fresh noodles or fresh glass noodles.

### BACKGROUND OF THE INVENTION

In recent years, problems in the aspects of food safety and food sanitation hazards are news themes frequently covered by various media nationwide. A means of ensuring catering and food safety has been an important subject that urgently needs to be addressed. As it comes to the twenty-first century and with continuous social progress, people's pace of life is accelerating and living standards are improving. Therefore, various fast foods and food selling manners have emerged. There are numerous street foods, fast foods, instant noodles, deep-fried foods, and the like.

Currently, there are two manners of getting fast foods. The first manner is fast food outlets that involve manual cooking and selling. In this manner, a long time is usually taken, it is inconvenient to buy foods, and food safety is often not guaranteed. There is the risk of cross infection among employees. The second manner is instant foods, especially, instant noodles. This manner is a reluctant choice for many consumers. People often buy instant noodles in convenience stores or street food stalls during travels, business trips or leisure and entertainment. However, there are two obvious disadvantages. First, instant noodles are served in small amounts, lack nutritional value, are mostly deep-fried, and probably contain preservatives. Second, boiled water is required to prepare instant noodles. As a result, the preparation and consumption of instant noodles are severely restricted, and instant noodles have poor nutrition value and unsatisfactory taste. Therefore, an intelligent food cooking machine that can rapidly cook healthy, nutritious, and wholesome foods with a variety of flavors is invented to satisfy people's requirements for healthy foods. The intelligent food cooking machine is convenient to use and time-saving, omits manual cooking and selling, and avoids the risk of cross infection among employees.

### SUMMARY OF THE INVENTION

An objective of the present invention is to provide an intelligent food cooking machine that has a simple structure and is convenient to use.

To achieve the objective, the present invention provides the following technical solution:

An intelligent food cooking machine comprises a frame. A bowl dispenser opening, a coin slot, a change return slot, and an operation panel are disposed on a panel of the frame. A coin device and a change return device are disposed in the frame. A refrigerator is disposed above the frame. A bowl storage mechanism for storing bowls is disposed in the refrigerator. A separation and fetching mechanism for separating and fetching a bowl is disposed below the bowl storage mechanism. A push mechanism for pushing a bowl is disposed on a side of a lower stop position of the separation and fetching mechanism. A microwave heating mechanism for heating a bowl is disposed in a pushing direction of the push mechanism. A delivery lifting mechanism is disposed on a side, facing the bowl dispenser opening, of the microwave heating mechanism. The delivery lifting mechanism delivers a heated bowl to the bowl dispenser opening.

By means of the foregoing technical solution, a customer performs an optional operation by using the operation panel on the frame. After a coin is inserted into the coin device through the coin slot, the change is returned through the change return slot. Bowls are stored in the bowl storage mechanism. A bowl is separated and fetched from the bowl storage mechanism by using the separation and fetching mechanism. When the bowl is placed in the lower stop position of the separation and fetching mechanism, the push mechanism pushes the bowl to the microwave heating mechanism for heating processing. After heating is completed, the push mechanism pushes the bowl to the delivery lifting mechanism again. The bowl is sent to the bowl dispenser opening by using the delivery lifting mechanism. In this way, a whole process of intelligent heating and selling is implemented, the structure is simple, and the use is convenient. In addition, a constant low-temperature state is kept inside the refrigerator, so that food in the bowl in the bowl storage mechanism in the refrigerator is kept fresh.

A further setting of the present invention is as follows: The bowl storage mechanism comprises a large wheel disc and a wheel disc drive device for driving the large wheel disc to rotate. A rotating shaft is disposed in the central position of the large wheel disc. A plurality of bowl drop holes is circumferentially and evenly distributed on the large wheel disc near the edge. A storage unit for storing bowls is disposed right above each bowl drop hole. The hole diameter of the bowl drop hole is greater than the diameter of a bowl cover. The separation and fetching mechanism is located right below the bowl drop hole.

By means of the foregoing technical solution, the large wheel disc of the bowl storage mechanism is rotatably connected to a bottom portion of the refrigerator by using the rotating shaft. The wheel disc drive device drives the large wheel disc to rotate in a relatively positioned manner. A plurality of bowl drop holes is circumferentially and evenly distributed on the large wheel disc near the edge. A storage unit for storing bowls is disposed right above each bowl drop hole. Each storage unit can store bowls, so that the bowl storage mechanism can store a large quantity of bowls. In addition, each storage unit is independent and corresponds to one bowl drop hole. After bowls in one storage unit are all conveyed, the large wheel disc only needs to rotate by an angle, and another storage unit is aligned with the separation and fetching mechanism again, so as to continue with a conveying procedure. In a conveying process, bowls in different storage units do not interfere with each other, so that the bowl storage mechanism can convey bowls filled with food to the separation and fetching mechanism stably for a long period of time.

A further setting of the present invention is as follows: The storage unit comprises a movable rod and a plurality of positioning rods. The movable rod and the positioning rods are circumferentially and evenly distributed along edges of the bowl drop holes. A starting track is disposed between the movable rod and a neighboring positioning rod. The movable rod can approach the positioning rod along the starting track.

By means of the foregoing technical solution, the movable rod and the positioning rods are circumferentially and evenly distributed along the edges of the bowl drop hole, to form a storage space for placing bowls. The bowls are stacked and sequentially placed in the storage space. In addition, the movable rod may slide towards the neighboring positioning rod through the starting track, to create an opening to the storage space. After the bowls in the storage space are all conveyed, an operator may fill the storage space with bowls again through the opening. The structure is simple, and the operation is convenient.

A further setting of the present invention is as follows: The wheel disc drive device comprises a small wheel disc and a wheel disc drive motor. An output shaft of the wheel disc drive motor is linked to the small wheel disc. The small wheel disc is placed on a side of the large wheel disc. Teeth engaging each other are provided on outer side walls of both the small wheel disc and the large wheel disc.

By means of the foregoing technical solution, the wheel disc drive motor drives the small wheel disc, and drives the large wheel disc to rotate clockwise or counterclockwise. In this way, each bowl drop opening in the large wheel disc can be aligned with the separation and fetching mechanism, to implement bowl delivery and fetching. The teeth of the small wheel disc and the large wheel disc mesh with each other for transmission. A rotation angle of the large wheel disc can be precisely controlled. In this way, a problem that the bowl drop hole cannot be aligned with the separation and fetching mechanism because of an excessively large or small rotation angle can be effectively avoided.

A further setting of the present invention is as follows: An ultraviolet germicidal lamp and an illuminating lamp are further mounted in the refrigerator. The ultraviolet germicidal lamp and the illuminating lamp are placed on a side of the bowl storage mechanism.

By means of the foregoing technical solution, the ultraviolet germicidal lamp is used to perform sterilization processing on the storage space in the refrigerator, thereby ensuring safety of food in the bowl.

A further setting of the present invention is as follows: The separation and fetching mechanism comprises a bowl separation mechanism and a bowl fetching mechanism. The bowl fetching mechanism is located right below the bowl separation mechanism. The bowl separation mechanism comprises a bowl separation cylinder, and the bowl separation cylinder is located right below the bowl drop hole. A plurality of bowl separation forks and a plurality of bowl separation fork seats for mounting the bowl separation forks are circumferentially and evenly distributed on an outer side wall of the bowl separation cylinder. The bowl separation fork is hingedly connected to the bowl separation fork seat. An upper clamping opening and a lower clamping opening are separately provided in positions on a cylinder wall of the bowl separation cylinder that correspond to the bowl separation fork, and the upper clamping opening and the lower clamping opening respectively fit upper and lower portions of the bowl separation fork. The bowl fetching mechanism comprises a bowl fetching arm and a bowl fetching lifting device for driving the bowl fetching arm to move up and down. A bowl tray fitting the bowl separation cylinder is provided on the bowl fetching arm. When the bowl tray moves upward, an outer edge of the bowl tray presses the upper portion of the bowl separation fork, so that the upper portion of the bowl separation fork sways outward, passes through the upper clamping opening, and is placed outside the bowl separation cylinder, and when the bowl tray moves downward, the outer edge of the bowl tray presses the lower portion of the bowl separation fork, so that the lower portion of the bowl separation fork sways outward, passes through the lower clamping opening, and is placed outside the bowl separation cylinder, so that the upper portion of the bowl separation fork sways inward, passes through the upper clamping opening, and is placed inside the bowl separation cylinder.

By means of the foregoing technical solution, when the bowl tray moves upwards, the bowl tray carries the bowl to move upward. In addition, the outer edge of the bowl tray presses the upper portion of the bowl separation fork, so that the upper portion of the bowl separation fork sways outward, passes through the upper clamping opening, and is placed outside the bowl separation cylinder. Then, the bowl tray moves downward by using the lifting device. In this case, the upper portion of the bowl separation fork is located outside the bowl separation cylinder and is no longer clamped to the bowl, and the bowl continues to move downward with the bowl tray. As the bowl tray keeps moving downward, the outer edge of the bowl tray presses the lower portion of the bowl separation fork, so that the lower portion of the bowl separation fork sways outward, passes through the lower clamping opening, and is placed outside the bowl separation cylinder. In this way, the upper portion of the bowl separation fork sways inward again, passes through the upper clamping opening, and is placed inside the bowl separation cylinder. In this case, the upper portion of the bowl separation fork exactly catches another bowl to prepare for a next time of fetching a bowl from the bowl tray. The structure is simple, and bowls can be continuously separated and fetched. Two neighboring bowls are precisely separated by means of swaying by the bowl separation fork and coordination of the bowl tray, thereby preventing interference during separation and fetching of bowls.

A further setting of the present invention is as follows: A sealing plate for sealing a lower end opening of the bowl separation cylinder is disposed at an interval below the bowl tray.

By means of the foregoing technical solution, each time after completing the action, the bowl fetching mechanism needs to move upward for resetting. The sealing plate on the bowl fetching arm and the lower end opening of the bowl separation cylinder are pressed and sealed, so as to prevent cold air in the refrigerator from leaking from the bowl separation cylinder. In addition, in a standby case, the sealing plate is also in a state of being pressed and sealed to a lower-end flange of the bowl separation cylinder, thereby preventing cold air from leaking, so as to achieve energy conservation and environmental protection.

A further setting of the present invention is as follows: Magnet members are separately provided at upper and lower ends of the bowl separation fork seat. The two magnet members respectively correspond to outer sides of the upper and lower portions of the bowl separation fork. During swaying of the bowl separation fork, the bowl separation fork and the magnet members can attract and stick to each other.

By means of the foregoing technical solution, during swaying of the bowl separation fork, the bowl separation fork and the magnet members can attract and stick to each other. The magnet members steadily attract an outer side surface of the fork, so that the fork cannot freely move or return, and the bowl separation fork is clamped to or separates stacked bowls more stably and effectively.

A further setting of the present invention is as follows: A clamping groove for clamping a bowl and an upper slanted surface fitting a rising and pressing action of the bowl tray are provided at the upper portion of the bowl separation fork. A lower slanted surface fitting a dropping and pressing action of the bowl tray is provided at the lower portion of the bowl separation fork. The upper slanted surface and the lower slanted surface are disposed facing each other.

By means of the foregoing technical solution, the bowl separation fork can be stably and firmly clamped to the bowl by using the clamping groove. When the bowl tray performs rising and dropping actions, the outer edge of the bowl tray presses the upper slanted surface and the lower slanted surface, so that the bowl separation fork sways inward or outward, thereby implementing clamping or separating of bowls. The structure is simple, and manufacturing is easy.

A further setting of the present invention is as follows: The bowl fetching lifting device comprises a mounting seat, a bowl fetching sliding block, and a bowl fetching lifting track used for the bowl fetching sliding block to move up and down. A bowl fetching drive component for driving the bowl fetching sliding block to move up and down is further provided on the mounting seat. The bowl fetching drive component comprises a bowl fetching screw rod and a bowl fetching drive motor for driving the bowl fetching screw rod to rotate. A screw nut is sleeved on the bowl fetching screw rod. The screw nut is fixedly connected to the bowl fetching sliding block.

By means of the foregoing technical solution, the bowl fetching arm moves up and down by using the bowl fetching lifting device. In addition, a tray for fetching a bowl is provided on the bowl fetching arm, the bowl fetching sliding block is fixedly connected to the bowl fetching arm, and the bowl fetching sliding block is fixedly connected to the screw nut. The bowl fetching drive motor drives the bowl fetching screw rod to rotate, thereby driving the screw nut to move up and down along the screw rod. In this way, the bowl fetching arm can move up and down by using the bowl fetching sliding block and the screw nut. Therefore, a process of conveying a bowl from one position to another is implemented. The structure is simple, and manufacturing is easy. The bowl fetching screw rod is threaded with the screw nut, and therefore, transmission is stable and no noise is produced. In addition, such a transmission structure can accurately enable the bowl fetching sliding block to rise or drop to a required position. Moreover, the bowl fetching screw rod and the screw nut do not cause secondary contamination to the bowl in the refrigerator, thereby ensuring safety of food in the refrigerator.

A further setting of the present invention is as follows: The push mechanism comprises a push mechanical hand, a linear push slide, and a push drive motor for driving the push mechanical hand to slide along the linear push slide. The linear push slide is disposed on a side of the separation and fetching mechanism and the microwave heating mechanism.

By means of the foregoing technical solution, when the bowl is in the lower stop position of the separation and fetching mechanism, the push drive motor drives the push mechanical hand to slide along the linear push slide, and the push mechanical hand fits the bowl and drives the bowl to move forward to be placed right below the microwave heating mechanism. In this way, a bowl can be effectively and stably conveyed from the separation and fetching mechanism to the microwave heating mechanism.

A further setting of the present invention is as follows: The microwave heating mechanism comprises a microwave housing, a heating lifting device, and a microwave heating component. The microwave housing comprises a housing and a sealing cover plate located below the housing. A round hole whose diameter is greater than the diameter of a bowl cover is provided at the center of the sealing cover plate. The heating lifting device is disposed right below the round hole. The microwave heating component is located on an upper top end portion of the microwave housing. The heating lifting device comprises a sealing tray for placing a bowl and a heating drive device for driving the sealing tray to move up and down. The diameter of the sealing tray is greater than the diameter of the round hole. When the heating drive device delivers a bowl on the sealing tray to the microwave housing for heating processing, the round hole of the sealing cover plate and an end surface of the sealing tray are pressed and sealed, and the bowl is placed in the microwave housing.

By means of the foregoing technical solution, the microwave heating component in the microwave housing heats food in the bowl according to a microwave heating principle. The microwave heating component has features such as high heating efficiency, low heat loss, and convenient operation. This greatly reduces a time for heating the food in the bowl, and improves utilization of thermal energy, thereby achieving energy conservation and environmental protection. When the bowl is placed at the center of the sealing tray of the heating lifting device, the heating lifting device moves upward to convey the bowl to the microwave housing. In this case, an end surface of the sealing tray and the round hole of the sealing cover plate at the lower end of the microwave housing are pressed and sealed, and the bowl is placed in the microwave housing. The microwave heating component starts to heat the food in the bowl. After heating is completed, the heating lifting device moves downward to a lower stop point, and is flush with a working table. The structure is simple, and the operation is easy.

A further setting of the present invention is as follows: The heating drive device comprises a heating slider, a heating lifting track used for the heating slider to slide up and down, a heating screw rod, and a heating drive motor for driving the heating screw rod to rotate. A threaded hole is provided at the heating slider. The heating slider is threaded to the heating screw rod through the threaded hole. The heating slider is fixedly connected to the sealing tray.

By means of the foregoing technical solution, the sealing tray in the heating lifting device can move up and down smoothly, so that during heating of food in the bowl, the round hole of the sealing cover plate of the microwave housing and the end surface of the sealing tray are better pressed and sealed, and the reliability is higher.

A further setting of the present invention is as follows: A positioning piece for aligning the center of the bowl is disposed in the housing. A liquid conveying tube for pouring soup, oil, and boiled water into the bowl is further disposed in the housing. The positioning piece has a conical tube-like structure. A large end opening of the positioning piece is disposed downward. The diameter of the large end opening of the positioning piece is greater than the diameter of the bowl cover.

By means of the foregoing technical solution, the conical structure has an automatic alignment function. When the bowl is placed on the sealing tray, as the heating lifting device moves upward to stably convey the bowl to the microwave housing, if the bowl is not located right at the center, the conical structure is used to finely adjust the position of the bowl for automatic alignment, thereby ensuring that the liquid conveying tube can be accurately inserted into a center hole of the bowl.

A further setting of the present invention is as follows: The delivery lifting mechanism comprises a delivery push rod and a delivery drive device for driving the delivery push rod to move up and down. A bowl delivery bin for placing the bowl is disposed right above the delivery push rod. A delivery track used for the bowl delivery bin to slide is provided on an inner wall of the panel of the frame. The delivery track extends to the bowl dispenser opening.

By means of the foregoing technical solution, after food in the bowl is heated, the push mechanical hand moves forward again to clamp and hold the bowl on the sealing tray, and pushes the bowl to the bowl delivery bin in the delivery lifting mechanism. When the bowl is steadily sent to the bowl delivery bin, the push mechanical hand looses, and moves backward for resetting. In this case, the delivery drive device drives the delivery push rod to move upward, and the delivery push rod pushes the bowl delivery bin to slide along the delivery track to the bowl dispenser opening. The structure is simple.

A further setting of the present invention is as follows: An automatic chopstick dispenser mechanism is disposed above the bowl delivery bin. The automatic chopstick dispenser mechanism comprises a chopstick box. A chopstick conveying device is disposed in the chopstick box. A chopstick dispensing opening is provided on a bottom wall of the chopstick box. The chopstick dispensing opening is hingedly connected to a hinge plate. A reset torsion spring for maintaining the hinge plate and the bottom wall of the chopstick box on a same horizontal plane is provided at the hinge plate. A chopstick pressing device is disposed above the hinge plate. A pressing track used for the chopstick pressing device to slide up and down is provided on a side wall of the chopstick box. Chopsticks pass through the chopstick conveying device and are located between the chopstick pressing device and the hinge plate. When the chopstick pressing device slides downward, the chopstick pressing device presses the hinge plate so that the chopsticks drop from the chopstick dispensing opening. When the chopstick pressing device slides upward, the chopstick pressing device and the hinge plate are separated. The hinge plate is reset by using the reset torsion spring.

By means of the foregoing technical solution, the chopsticks are placed between the chopstick pressing device and the hinge plate by using the chopstick conveying device. The chopsticks are placed on the hinge plate. When the chopstick pressing device slides downward through the pressing track, the chopstick pressing device presses the hinge plate. In this case, the hinge plate is pushed to turn over downward, and at the same time, the chopsticks placed on the hinge plate drop from the chopstick dispensing opening, thereby implementing automatic chopstick dispensing. The structure is simple.

A further setting of the present invention is as follows: The chopstick pressing device comprises a press block. A chopstick push rod is provided at an upper portion of the press block. A reset spring is separately provided on left and right side walls of the press block. An end of the reset spring abuts a bottom portion of the track.

By means of the foregoing technical solution, under the effect of the chopstick push rod, the press block presses the hinge plate down, so that chopsticks drop. Subsequently, the press block is automatically reset under the effect of the reset spring, to prepare for a next time of chopstick dispensing. The structure is simple, and the operation is easy.

A further setting of the present invention is as follows: The chopstick conveying device comprises a timing belt and a drive motor. A primary timing pulley and a secondary timing pulley are provided on the timing belt. An output shaft of the drive motor is connected to the primary timing pulley. An upper end surface of the timing belt and the bottom wall of the chopstick box are on a same horizontal plane.

By means of the foregoing technical solution, the drive motor implements rotation of the timing belt by using the primary timing pulley and the secondary timing pulley. In addition, the upper end surface of the timing belt and the bottom wall of the chopstick box are on a same horizontal plane. The drive motor is controlled to rotate clockwise or counterclockwise, to implement chopstick delivery and chopstick arrangement.

### BRIEF DESCRIPTION OF THE DRAWINGS

Fig. 1 is a schematic structural diagram of an intelligent food cooking machine according to the present invention;
Fig. 2 is a schematic structural diagram of an intelligent food cooking machine without a refrigerator according to the present invention;
Fig. 3 is a schematic structural diagram of an intelligent food cooking machine without a bowl storage mechanism according to the present invention;
Fig. 4 is a schematic structural diagram of an intelligent food cooking machine without a frame according to the present invention;
Fig. 5 is a schematic structural diagram of an intelligent food cooking machine without a refrigerator and a frame according to the present invention;
Fig. 6 is a schematic structural diagram of a bowl storage mechanism;
Fig. 7 is a schematic structural diagram of a bowl storage mechanism without a drive device;
Fig. 8 is a schematic structural diagram of a large wheel disc in Fig. 6;
Fig. 9 is a schematic structural diagram of a separation and fetching mechanism in Fig. 4;
Fig. 10 is a schematic structural diagram of a bowl separation mechanism in Fig. 9;
Fig. 11 is a schematic structural diagram of a bowl separation fork in Fig. 10;
Fig. 12 is a first schematic structural diagram of a bowl fetching mechanism in Fig. 9;
Fig. 13 is a second schematic structural diagram of the bowl fetching mechanism in Fig. 9;
Fig. 14 is a schematic structural diagram of a push mechanism in Fig. 4;
Fig. 15 is a schematic diagram showing that a push mechanism uses a push mechanical hand to grasp a bowl and push forward the bowl;
Fig. 16 is a schematic structural diagram of a microwave heating mechanism in Fig. 4;
Fig. 17 is an exploded view of the microwave heating mechanism in Fig. 4 without a heating drive device;
Fig. 18 is a schematic structural diagram of a microwave housing in Fig. 16;
Fig. 19 is an assembly diagram of a delivery lifting mechanism and an automatic chopstick dispenser mechanism;
Fig. 20 is a schematic structural diagram of an automatic chopstick dispenser mechanism in Fig. 4;
Fig. 21 is a schematic structural diagram of the automatic chopstick dispenser mechanism in Fig. 20 without a chopstick box; and
Fig. 22 is a schematic structural diagram of the chopstick box in Fig. 20.

Description of reference numerals: 1. frame; 11. refrigerator; 12. advertising machine; 13. operation panel; 14. bowl dispenser opening; 15. coin slot; 16. change return slot; 2. bowl storage mechanism; 21. large wheel disc; 211. bowl drop hole; 22. wheel disc drive device; 221. small wheel disc; 222. wheel disc drive motor; 23. storage unit; 231. movable rod; 232. positioning rod; 233. starting track; 3. separation and fetching mechanism; 31. bowl separation mechanism; 311. bowl separation cylinder; 3111. upper clamping opening; 3112. lower clamping opening; 312. bowl separation fork; 3121. clamping groove; 3122. upper slanted surface; 3123. lower slanted surface; 313. bowl separation fork seat; 314. magnet member; 32. bowl fetching mechanism; 321. bowl fetching arm; 322. bowl fetching lifting device; 3221. mounting seat; 3222. bowl fetching sliding block; 3223. bowl fetching lifting track; 3224. bowl fetching drive component; 323. bowl tray; 324. sealing plate; 4. push mechanism; 41. push mechanical hand; 411. holding arm; 412. holding arm seat; 413. drive steering motor; 42. linear push slide; 421. push slider; 422. push track; 43. push drive motor; 5. microwave heating mechanism; 51. microwave housing; 511. housing; 512. sealing cover plate; 52. heating lifting device; 521. sealing tray; 522. heating drive device; 5221. heating slider; 5222. heating lifting track; 53. microwave heating component; 54. positioning piece; 55. liquid conveying tube; 6. delivery lifting mechanism; 61. delivery push rod; 62. delivery drive device; 63. bowl delivery bin; 7. automatic chopstick dispenser mechanism; 71. chopstick box; 711. chopstick dispensing opening; 712. hinge plate; 72. chopstick conveying device; 73. chopstick pressing device; 731. press block; 732. chopstick push rod; 74. chopstick pressing track; 75. limiting plate; 76. slope plate.

### DETAILED DESCRIPTION OF THE INVENTION

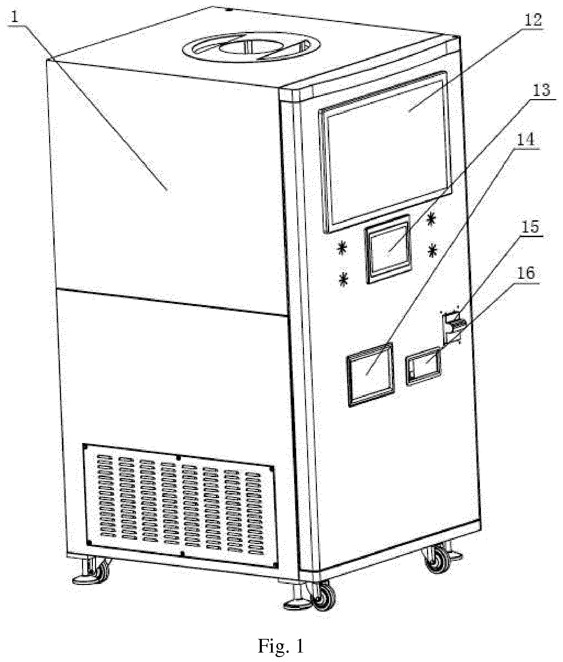

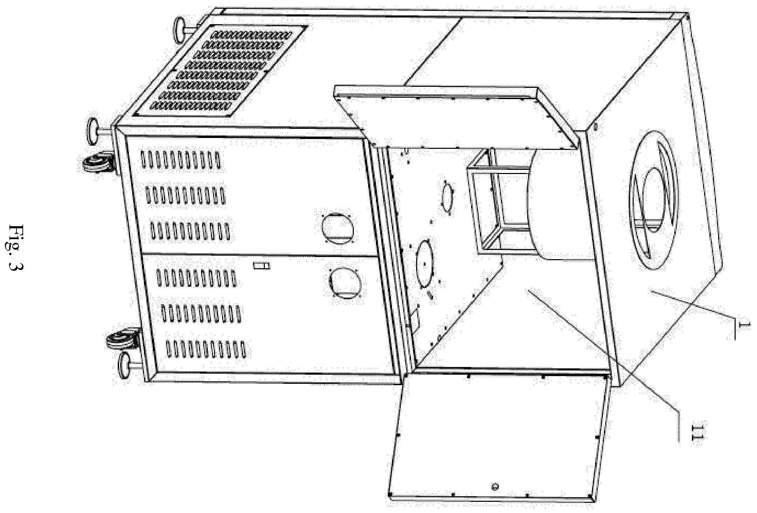

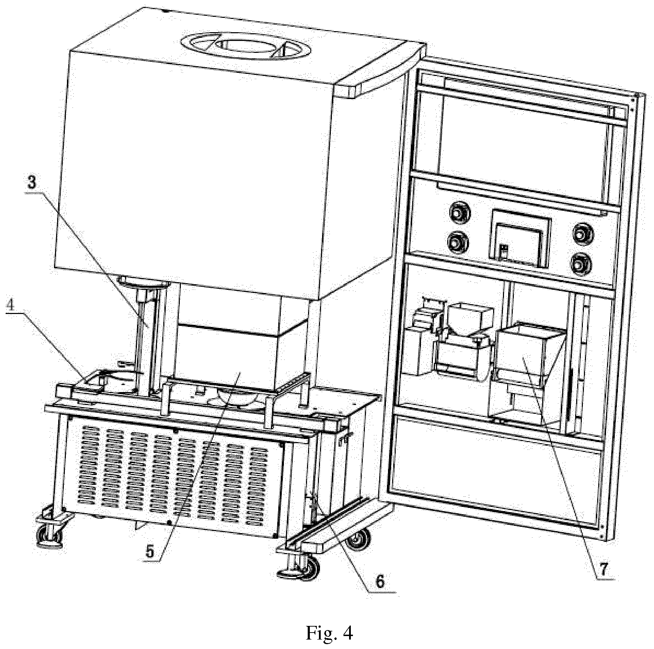

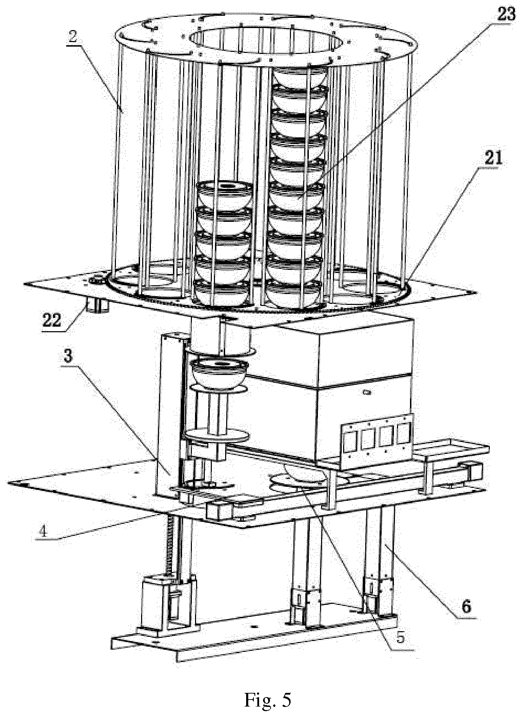

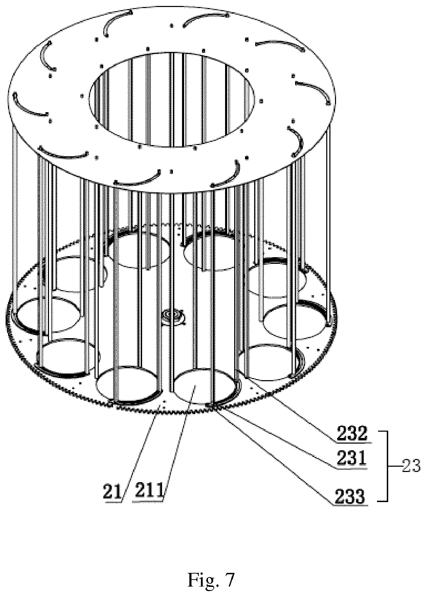

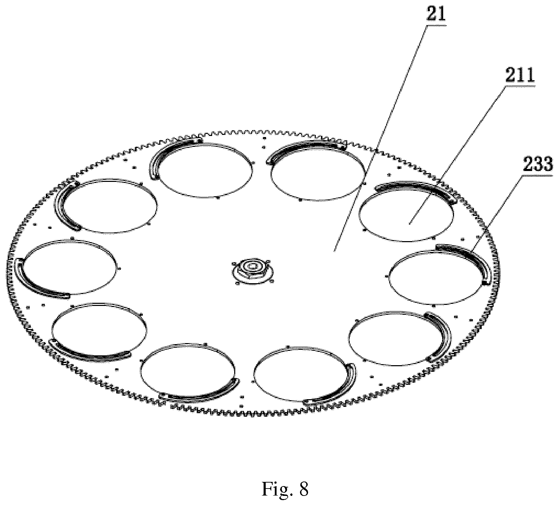

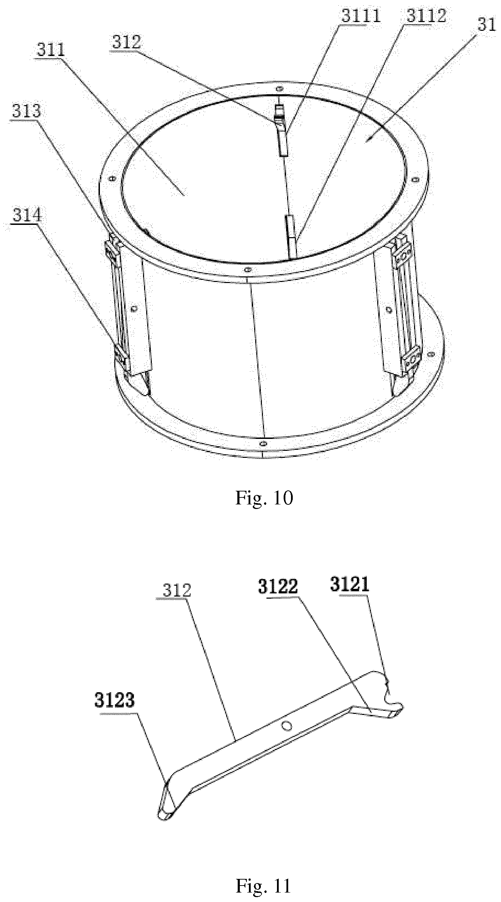

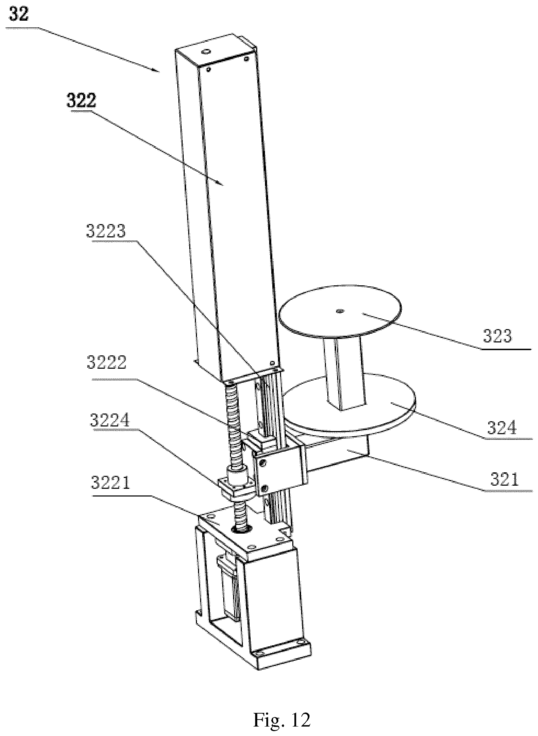

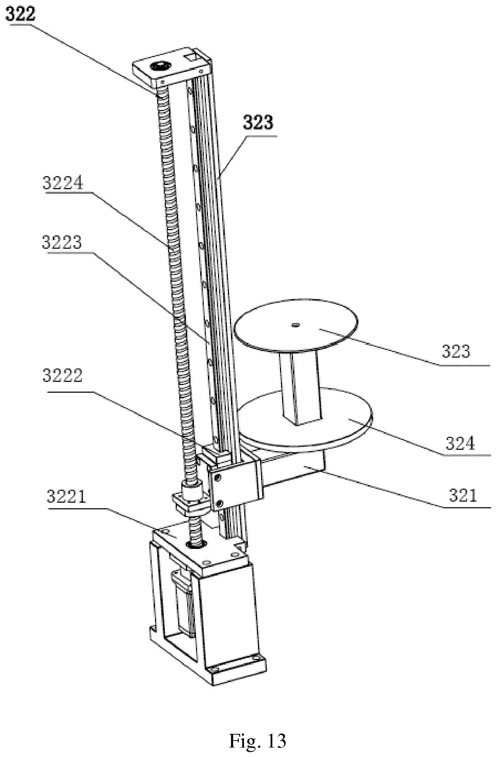

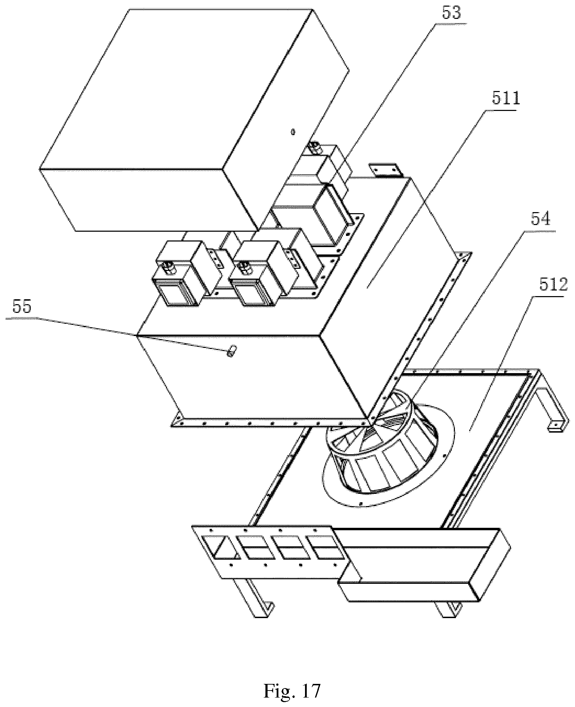

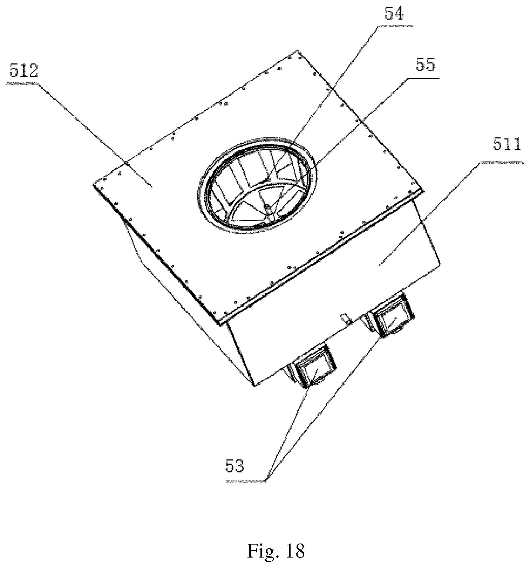

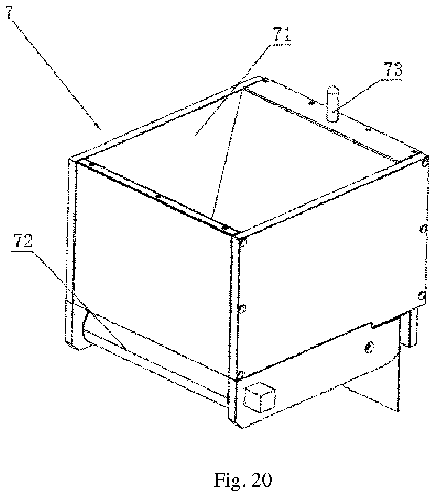

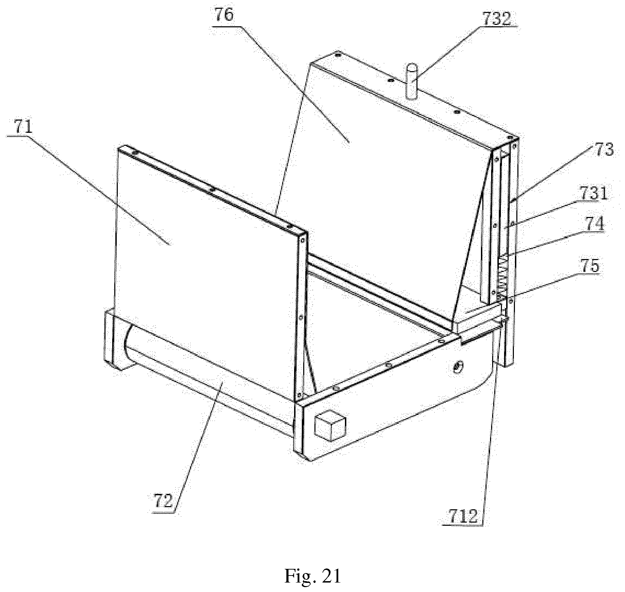

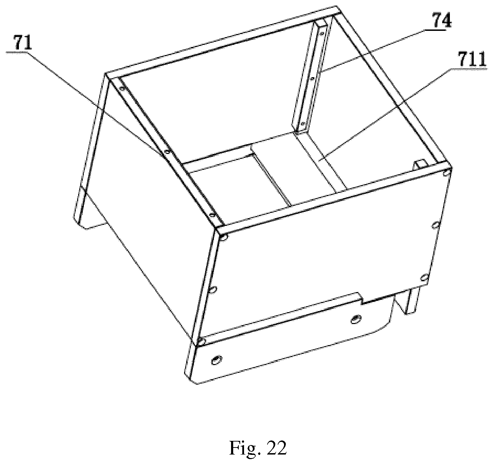

An embodiment of an intelligent food cooking machine of the present invention is further described in detail with reference to Fig. 1 to Fig. 22.

A bowl that is used in conjunction with the intelligent food cooking machine and used for placing fresh glass noodles or noodles comprises a bowl-shaped main body for storing foods such as noodles or glass noodles and a bowl cover for covering. A bowl edge of the bowl-shaped main body is a concave everted rim, and the concave everted rim is disposed downward.

An intelligent food cooking machine comprises a frame 1, and a refrigerator 11 is disposed on the frame. It can be learned from Fig. 1 that the refrigerator 11 comprises a refrigerator body, a refrigerator main unit, and a refrigerator door. An illuminating lamp and an ultraviolet germicidal lamp are mounted in the refrigerator 11. The illuminating lamp is controlled in such a manner that when the door is open, the lamp is turned on, and when the door is closed, the lamp is turned off. In contrast, the ultraviolet germicidal lamp is turned on when the door is closed, and is turned off when the door is open. In addition, when in a steady on state, the ultraviolet lamp further has a time interval control function (that is, when the door is closed, the ultraviolet lamp may be automatically controlled to be turned on/off according to a specified time, to mainly increase the service life of the ultraviolet lamp, thereby ensuring food sanitation and personal safety (because the working principle and specific structure of the refrigerator belong to the existing mature technology, details are not described herein). It can be learned from Fig. 1 that the frame 1 comprises a front door, a frame body, an electric control cabinet, and a frame rear door. An advertising machine 12, an operation panel 13, a bowl dispenser opening 14, a coin slot 15, and a change return slot 16 are disposed above the front door. A coin device and a change return device are respectively disposed in positions corresponding to the coin slot 15 and the change return slot 16 (because the working principle and specific structure of the coin device and the change return device belong to the existing mature technology, details are not described herein). The frame 1 is formed by combining a plurality of sheet metal parts. To facilitate movement of the entire machine, casters are disposed on a bottom portion of the frame body.

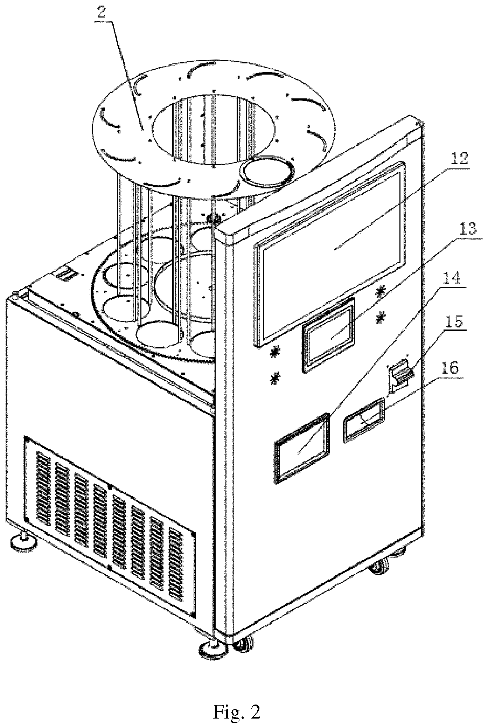

It can be learned from Fig. 2 to Fig. 5 that, the frame 1 and the refrigerator 11 are separate and combined through insertion. A bowl storage mechanism 2 for storing bowls is disposed in the refrigerator 11. A separation and fetching mechanism 3 for separating and fetching a bowl is disposed right below the bowl storage mechanism 2. A push mechanism 4 for pushing a bowl is disposed on a side of a lower stop position of the separation and fetching mechanism 3. A microwave heating mechanism 5 for heating a bowl is disposed in a pushing direction of the push mechanism 4. A delivery lifting mechanism 6 is disposed on a side, facing the bowl dispenser opening 14, of the microwave heating mechanism 5. The delivery lifting mechanism 6 delivers a heated bowl to the bowl dispenser opening 14. The separation and fetching mechanism 3, the push mechanism 4, the microwave heating mechanism 5, and the delivery lifting mechanism 6 are all disposed in corresponding positions of a working table on the frame 1.

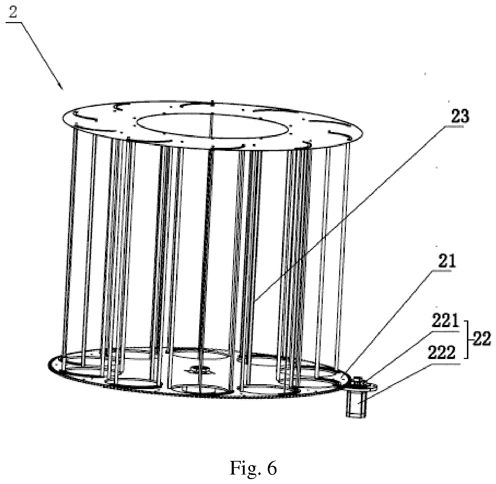

It can be learned from Fig. 6 to Fig. 8 that, the bowl storage mechanism 2 comprises a large wheel disc 21 and a wheel disc drive device 22 for driving the large wheel disc 21 to rotate. A rotating shaft is disposed in the central position of the large wheel disc 21. The rotating shaft is disposed on a separation plate. A plurality of bowl drop holes 211 is circumferentially and evenly distributed on the large wheel disc 21 near the edge. A storage unit 23 for storing bowls is provided at each bowl drop hole 211. The hole diameter of the bowl drop hole 211 is greater than the diameter of a bowl cover. The hole diameter is preferably greater than the diameter of the bowl cover by 0.5 mm to 2 mm. This not only can ensure that a bowl is conveyed smoothly from the bowl drop hole 211, but also may avoid deviation in a conveying process of a bowl, so that the bowl is prevented from being stuck in the bowl drop hole 211. A through hole is further provided at the separation plate. The hole diameter of the through hole may be greater than or equal to the hole diameter of the bowl drop hole 211. The separation and fetching mechanism 3 is located right below the through hole and one bowl drop hole 211. The large wheel disc 21 of the bowl storage mechanism 2 is rotatably connected to a bottom plate of the refrigerator by using the rotating shaft. The wheel disc drive device 22 drives the large wheel disc 21 to rotate in a relatively positioned manner. Because the plurality of bowl drop holes 211 is circumferentially and evenly distributed on the large wheel disc 21 near the edge, and the storage unit 23 for storing bowls is provided at each bowl drop hole 211 , the structure is simple. Each storage unit 23 can store bowls , so that the bowl storage mechanism 2 can store a large quantity of bowls. In addition, each storage unit 23 is independent and corresponds to one bowl drop hole 211. After bowls in one storage unit 23 are all conveyed, the large wheel disc 21 only needs to rotate by an angle, and another storage unit 23 is aligned with the separation and fetching mechanism 3 again, so as to continue with a conveying procedure. In the conveying process, bowls in different storage units 23 do not interfere with each other, so that the bowl storage mechanism 2 can convey bowls filled with food to the separation and fetching mechanism 3 stably for a long period of time.

The storage unit 23 comprises a movable rod 231 and a plurality of positioning rods 232. There is one movable rod 231, and there are three positioning rods 232. The movable rod 231 and the positioning rods 232 are circumferentially and evenly distributed along edges of the bowl drop hole 211. In this way, the movable rod 231 and a neighboring positioning rod 232 have an interval of 90 degrees. The movable rod 231 is in a position close to the edge of the large wheel disc 21. A starting track 233 is disposed between the movable rod 231 and a neighboring positioning rod 232. The movable rod 231 can approach the positioning rod 232 along the starting track 233. The movable rod 231 and the positioning rod 232 are circumferentially and evenly distributed along the edges of the bowl drop hole 211, to enclose a storage space for placing bowls. The bowls are stacked and sequentially placed in the storage space. The structure is simple, and manufacturing is easy. In addition, the movable rod 231 may slide towards the neighboring positioning rod 232 through the starting track 233, to create an opening to the storage space. After the bowls in the storage space are all conveyed, an operator may fill the storage space with bowls again through the opening. The structure is simple, and the operation is convenient.

The starting track 233 is an arc-shaped track. A fixing ring for fixing a bowl storage unit is disposed above the large wheel disc 21. One end of the positioning rod 232 and one end of the movable rod 231 are connected to the large wheel disc 21, and the other end of the positioning rod 232 and the other end of the movable rod 231 are connected to the fixing ring, so that the storage unit 23 is more firmly and stably mounted. A slide groove used for the movable rod 231 to slide is provided in a position in the fixing ring corresponding to the starting track 233, so that the movable rod 231 does not deviate during sliding along the starting track 233. In this way, the movable rod 231 slides more stably and smoothly. A compression spring is sleeved on one end, connected to the fixing ring, of the movable rod 231. The movable rod 231 abuts the large wheel disc 21 by using the compression spring. In this way, when the movable rod 231 is placed in a positioning hole or after the movable rod 231 slides along the starting track 233, the movable rod 231 does not shake, so that a bowl is stably placed in the storage unit all the time. The positioning hole is provided at one end portion, close to the movable rod 231, of the starting track 233. In a feeding process, the movable rod 231 is fixed in the positioning hole. When a bowl needs to be stored, the movable rod 231 move upward and is separated from the positioning hole, so that the movable rod 231 is placed on the starting track 233. The movable rod 231 may approach the positioning rod 232 along the arc-shaped track.

The wheel disc drive device 22 comprises a small wheel disc 221 and a wheel disc drive motor 222. An output shaft of the wheel disc drive motor 222 is linked to the small wheel disc 221. The small wheel disc 221 is placed on a side of the large wheel disc 21. Teeth engaging each other are provided on outer side walls of both the small wheel disc 221 and the large wheel disc 21. The wheel disc drive motor 222 drives the small wheel disc 221, and drives the large wheel disc 21 to rotate clockwise or counterclockwise. In this way, each bowl drop opening in the large wheel disc 21 can be aligned with the separation and fetching mechanism 3, to implement bowl delivery and fetching. The outer teeth of the small wheel disc 221 and the large wheel disc 21 mesh with each other for transmission. A rotation angle of the large wheel disc 21 can be precisely controlled. In this way, a problem of an excessively large or small rotation angle can be effectively avoided, so that the bowl drop hole 211 can be accurately aligned with the separation and fetching mechanism 3. To prevent the large wheel disc 21 from deviating during rotation, a plurality of support sliding blocks is disposed on a lower end surface the large wheel disc 21. The support sliding blocks are circumferentially and evenly distributed by using the rotating shaft as the center. The support sliding blocks slide relative to a top plate of the bottom of the refrigerator. The top plate of the bottom of the refrigerator is a flat and smooth stainless steel sheet. The support sliding blocks are made of polytetrafluoroethylene materials, and therefore have a feature of a small friction factor when sliding against each other.

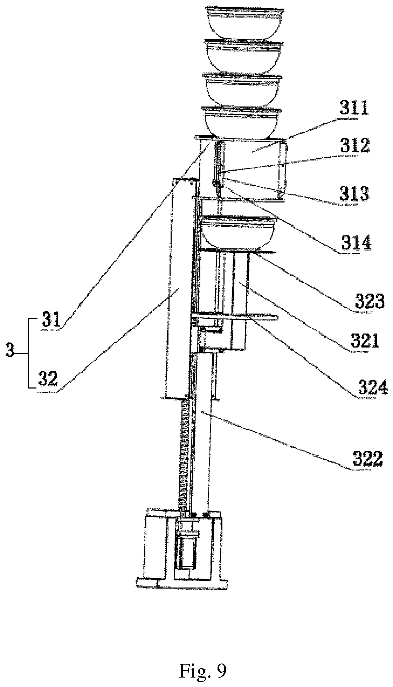

It can be learned from Fig. 9 to Fig. 13 that, the separation and fetching mechanism 3 comprises a bowl separation mechanism 31 and a bowl fetching mechanism 32. The bowl fetching mechanism 32 is located below the bowl separation mechanism 31. The bowl separation mechanism 31 comprises a bowl separation cylinder 311, and the bowl separation cylinder 311 is located right below the bowl drop hole 211, so that center lines of the bowl separation cylinder 311, the through hole in the separation plate, and the bowl drop hole 211 coincide. In this way, a bowl sequentially passes through the bowl drop hole 211 and the through hole smoothly and is placed in the bowl separation cylinder 311. A plurality of bowl separation forks 312 and a plurality of bowl separation fork seats 313 for mounting the bowl separation forks 312 are circumferentially and evenly distributed on an outer side wall of the bowl separation cylinder 311. There may be three bowl separation forks 312 and three bowl separation fork seats 313, so that the three bowl separation forks 312 are evenly distributed at an interval of 120 degrees in a triangle shape, and bowls can be more steadily clamped. The bowl separation fork seat 313 comprises two fixed plates disposed at an interval. The fixed plate may be fixed to the outer side wall of the bowl separation cylinder 311 by using screws. The structure is simple, and manufacturing is easy. A hinge hole is provided at a portion of the bowl separation fork 312 close to the middle. A hinged shaft is provided in the hinge hole. Two ends of the hinged shaft are respectively connected to two fixed plates. The bowl separation fork 312 may sway relative to the hinged shaft. The bowl separation fork 312 is placed between the two fixed plates. The two fixed plates have a limiting effect on the swaying of the bowl separation fork 312, so that during swaying of the bowl separation fork 312, no deviation occurs. To prevent the bowl separation fork 312 from freely swaying or automatically returning after swaying is completed, magnet members 314 are separately provided at upper and lower ends of the bowl separation fork seat 313 . The magnet members are fixed to the upper and lower end portions of the bowl separation fork seat 313 by using magnet seats. The two magnet members 314 respectively correspond to the upper and lower portions of the bowl separation fork 312. During swaying of the bowl separation fork 312, the bowl separation fork 312 and the magnet members 314 can attract and stick to each other. The magnet members 314 stably attract an outer side surface of the fork, so that the fork cannot freely move or return. To enable the bowl separation fork 312 and the magnet members 314 to better attract and stick to each other, the bowl separation fork 312 is made of iron or steel, and the surface of the bowl separation fork 312 is plated with nickel.

An upper clamping opening 3111 and a lower clamping opening 3112 are separately provided in positions on a cylinder wall of the bowl separation cylinder 311 that correspond to the bowl separation fork 312. The upper clamping opening 3111 and the lower clamping opening 3112 are disposed along a length direction of the bowl separation fork 312. The upper clamping opening 3111 and the lower clamping opening 3112 respectively fit upper and lower portions of the bowl separation fork 312. Both the upper clamping opening 3111 and the lower clamping opening 3112 are rectangular holes, so as to fit the upper and lower ends of the bowl separation fork 312.

A clamping groove 3121 for clamping a bowl and an upper slanted surface 3122 fitting a rising and pressing action of the bowl tray is provided at the upper portion of the bowl separation fork 312. The bowl separation fork 312 can be stably and firmly clamped to the bowl by using the clamping groove 3121. A lower slanted surface 3123 fitting a dropping and pressing action of the bowl tray is provided is provided at the lower portion of the bowl separation fork 312. The upper slanted surface 3122 and the lower slanted surface 3123 are disposed facing each other.

The bowl fetching mechanism 32 comprises a bowl fetching arm 321 and a bowl fetching lifting device 322 for driving the bowl fetching arm 321 to move up and down. The bowl fetching arm 321 is an L-type arm. A bowl tray 323 fitting the bowl separation cylinder 311 is provided on the bowl fetching arm 321. A sealing plate 324 is provided at an interval at a lower end of the bowl tray 323. The diameter of the bowl tray 323 is slightly less than the inner diameter of the bowl separation cylinder 311. In this way, the bowl tray 323 can move up and down more smoothly in the bowl separation cylinder 311.

The bowl fetching lifting device 322 comprises a mounting seat 3221, a bowl fetching sliding block 3222, and a bowl fetching lifting track 3223 used for the bowl fetching sliding block 3222 to move up and down. A bowl fetching drive component 3224 for driving the bowl fetching sliding block 3222 to move up and down is further provided on the mounting seat 3221. The bowl fetching drive component 3224 comprises a bowl fetching screw rod and a bowl fetching drive motor for driving the bowl fetching screw rod to rotate. A screw nut is sleeved on the bowl fetching screw rod. The screw nut is fixedly connected to the bowl fetching sliding block 3222. The rotating process of the screw rod drives the screw nut to move upward or downward, thereby driving the bowl fetching sliding block 3222 to move up and down along the bowl fetching lifting track 3223. In addition, the transmission structure can accurately enable the bowl fetching sliding block 3222 to rise or drop to a required position. The bowl fetching drive motor is fixed below the mounting seat 3221 by using a flange. This can effectively reduce a mounting space for the bowl fetching drive component 3224. A bearing is provided at the mounting seat 3221. A lower portion of the bowl fetching screw rod is linked to the bowl fetching drive motor through an inner ring of the bearing. In this way, the screw rod rotate without shaking. A screw rod mounting plate is provided at the upper portion of the bowl fetching lifting track 3223. A bearing that fits the upper portion of the bowl fetching screw rod is provided at the screw rod mounting plate, to further fix the bowl fetching screw rod. In this way, the bowl fetching screw rod is more stable during rotation, and noise is further reduced.

The bowl fetching arm 321 has an L-shaped structure. One end of the bowl fetching arm 321 is fixedly connected to the bowl fetching sliding block 3222, and the other end of the bowl fetching arm 321 is fixedly connected to the bowl tray 323, so that the bowl fetching lifting device 322 does not need to be located right below the bowl separation cylinder, and the bowl tray 323 of the bowl fetching lifting device 322 only needs to be coaxially mounted with the bowl separation cylinder.

Each time after completing working, the bowl fetching mechanism 32 needs to move upward for resetting. The sealing plate 324 on the bowl fetching arm 321 and a lower-end flange of the bowl separation cylinder 311 are pressed and sealed, so as to prevent cold air in the refrigerator 11 from leaking from the bowl separation cylinder 311. In a standby case, the sealing plate 324 is also in a state of being pressed and sealed to the lower-end flange of the bowl separation cylinder 311.

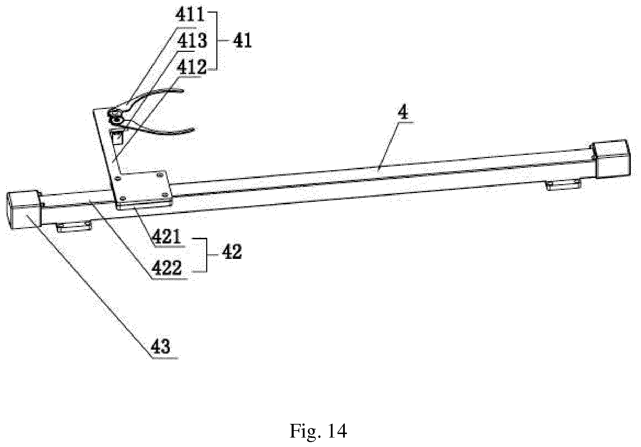

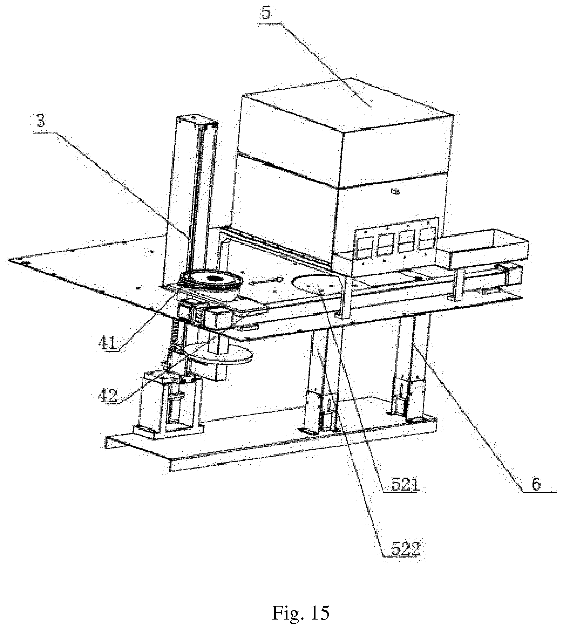

It can be learned from Fig. 14 and Fig. 15 that, the push mechanism 4 comprises a push mechanical hand 41, a linear push slide 42, and a push drive motor 43 for driving the push mechanical hand 41 to slide along the linear push slide 42. The push mechanical hand 41 comprises two holding arms 411, a drive steering motor 413 for driving the two holding arms 411 to relatively move, and a holding arm seat 412 for mounting the holding arms 411 and the drive steering motor 413. The linear push slide 42 comprises a push slider 421 and a push track 422. The push slider 421 may slide along the push track 422. The push mechanical hand 41 is fixed to the push slider. The radian of the holding arm 411 of the push mechanical hand 41 fits the shape of the bowl body of a bowl. The linear push slide 42 is placed on a side of the separation and fetching mechanism 3 and the microwave heating mechanism 5. The length of the linear push slide 42 may be set according to a travel requirement. When a bowl is located in the lower stop position of the separation and fetching mechanism, the push drive motor 43 drives the push mechanical hand 41 to slide along the linear push slide 42, and the push mechanical hand 41 clamps and holds the bowl to move forward and to be placed in the microwave heating mechanism 5. In this way, the bowl can be effectively and stably conveyed from the separation and fetching mechanism 3 to the microwave heating mechanism 5.

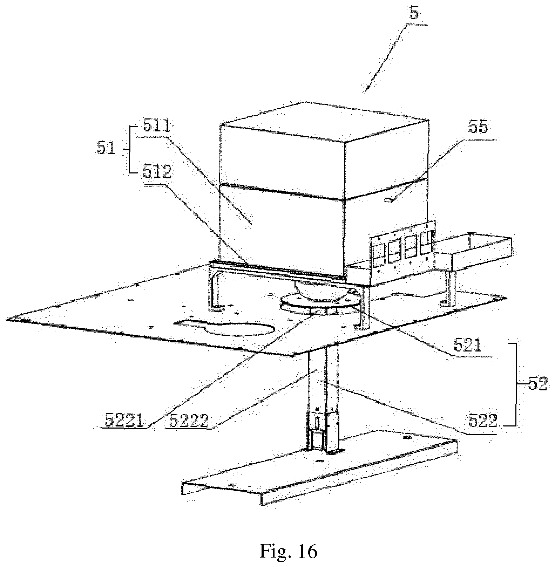

It can be learned from Fig. 16 to Fig. 18 that, the microwave heating mechanism 5 comprises a microwave housing 51, a heating lifting device 52, and a microwave heating component 53. The microwave housing 51 comprises a housing 511 and a sealing cover plate 512 located below the housing 511. A round hole whose diameter is greater than the diameter of a bowl cover is provided at the center of the sealing cover plate 512. The heating lifting device 52 is disposed right below the round hole. The microwave heating component 53 is located on an upper top end portion of the microwave housing 51. The heating lifting device 52 comprises a sealing tray 521 for placing a bowl and a heating drive device 522 for driving the sealing tray 521 to move up and down. The diameter of the sealing tray 521 is greater than the diameter of the round hole. When the heating drive device 522 delivers the bowl on the sealing tray 521 to the microwave housing 51 for heating processing, the round hole of the sealing cover plate 512 of the microwave housing 51 and an end surface of the sealing tray 521 are pressed and sealed, and the bowl is placed in the microwave housing 51. The microwave heating component 53 starts to heat the bowl, and heats food in the bowl according to a microwave heating principle. The microwave heating component 53 has features such as high heating efficiency, low heat loss, and convenient operation. This greatly reduces a time for heating the bowl, and improves utilization of thermal energy, thereby achieving energy conservation and environmental protection. After heating is completed, the heating lifting device 52 moves downward to a lower stop point, and is flush with a working table. The structure is simple, and the operation is easy.

The heating drive device 522 comprises a heating slider 5221, a heating lifting track 5222 used for the heating slider 5221 to slide up and down, a heating screw rod, and a heating drive motor for driving the heating screw rod to rotate. A threaded hole is provided at the heating slider 5221. The heating slider 5221 is threaded to the heating screw rod through the threaded hole. The heating slider 5221 is fixedly connected to the sealing tray 521. The sealing tray 521 in the heating lifting device 52 can move up and down smoothly, so that during heating of the bowl, the round hole of the sealing cover plate 512 of the microwave housing 51 and the end surface of the sealing tray 521 are better pressed and sealed, and the reliability is higher.

A positioning piece 54 for aligning the center of the bowl is disposed in the microwave housing 51. A liquid conveying tube 55 for pouring soup, oil, and boiled water into the bowl is further disposed in the microwave housing 51. The positioning piece 54 has a conical tube-like structure. A large end opening of the positioning piece 54 is disposed downward. The diameter of the large end opening of the positioning piece 54 is greater than the diameter of the bowl cover. The conical structure has an automatic alignment function. When the bowl is placed on the sealing tray 521, as the heating lifting device 52 moves upward to stably convey the bowl to the microwave housing 51, if the bowl is not located at the center, the conical structure is used to finely adjust the position of the bowl for automatic alignment, thereby ensuring that the liquid conveying tube 55 can be accurately inserted into a center hole of the bowl.

The microwave heating component 53 mainly comprises a magnetron with a water cooling jacket, an excitation cavity, and a heating control power supply. The power supply is controlled, so that the magnetron with a water cooling jacket and the excitation cavity perform microwave heating work. (The specific structure and working principle of the microwave heating component 53 belong to the existing mature technology, and details are not described herein.) A circulating cooling water tank is mounted below the microwave heating component 53. The circulating cooling water tank is a water storage tank for circulating cooling required by the microwave heating mechanism. A float switch is mounted in the circulating water tank, and is used to control the height of the water level, to ensure that the water tank stores sufficient water all the time and prevent water from overflowing or being used up, thereby fully ensuring normal and effective work of microwave heating. The circulating cooling water tank is mainly used to control the working temperature of the microwave heating component 53 to stay in a specified range, thereby ensuring the service life and function stability of the microwave heating component 53.

A plurality of air outlet holes is provided on a side of the microwave housing 51. The diameter of the air outlet hole is 1 mm. This not only can ensure that air in the microwave housing 51 is exhausted, but also can prevent microwave in the microwave housing 51 from leaking.

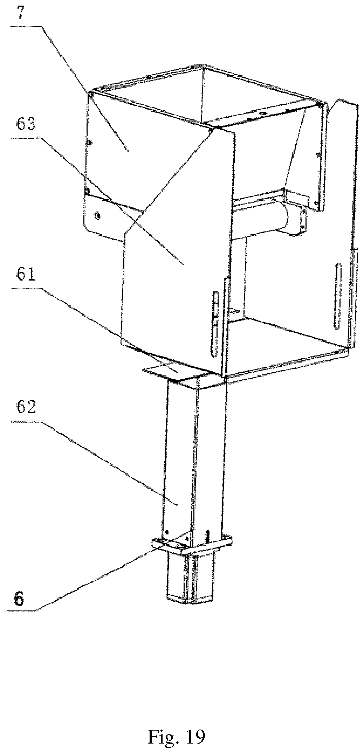

It can be learned from Fig. 19 that, the delivery lifting mechanism 6 comprises a delivery push rod 61 and a delivery drive device 62 for driving the delivery push rod 61 to move up and down. The structure of the delivery drive device 62 is the same as the structure of the heating lifting device 52. That is, a screw rod is also used for transmission. In this way, the push rod can be precisely moved to a required position. A bowl delivery bin 63 for placing a heated bowl is disposed right above the delivery push rod 61. A delivery track used for the bowl delivery bin 63 to slide is provided on an inner wall of a panel of the frame 1. The delivery track extends to the bowl dispenser opening 14. After the bowl is heated, the push mechanical hand 41 continues to push the bowl on the sealing tray 521 to the bowl delivery bin 63 in the delivery lifting mechanism 6, and the push mechanical hand 41 immediately exits and is reset. In this case, the delivery drive device 62 drives the delivery push rod 61 to rise and abut a bottom portion of the bowl delivery bin 63. The bowl delivery bin 63 slides to the bowl dispenser opening 14 along the delivery track. The structure is simple.

It can be learned from Fig. 19 to Fig. 22 that, when the bowl is sent to the bowl dispenser opening 14 from the bowl delivery bin 63, an automatic chopstick dispenser mechanism 7 is disposed above the bowl delivery bin 63, to automatically place chopsticks in the bowl delivery bin 63. The automatic chopstick dispenser mechanism 7 comprises a chopstick box 71. The chopstick box 71 is formed of a front side plate, a rear side plate, a left side plate, a right side plate, and a bottom plate. A chopstick conveying device 72 is disposed in the chopstick box 71. An opening for mounting the chopstick conveying device is disposed between the bottom plate and the rear side plate. A chopstick dispensing opening 711 is provided on a bottom wall of the chopstick box 71. The chopstick dispensing opening 711 is opened in the bottom plate and close to the front side plate. The chopstick dispensing opening 711 is hingedly connected to a hinge plate 712. A reset torsion spring (not shown in the figure) for maintaining the hinge plate 712 and the bottom wall of the chopstick box 71 on a same horizontal plane is provided at the hinge plate 712. In this way, chopsticks are stably and smoothly placed on the hinge plate 712 under the effect of the chopstick conveying device 72. A chopstick pressing device 73 is disposed above the hinge plate 712. A chopstick pressing track 74 used for the chopstick pressing device 73 to slide up and down is provided on a corresponding side wall of the chopstick box 71. The chopsticks pass through the chopstick conveying device 72 and are placed between the chopstick pressing device 73 and the hinge plate 712. When the chopstick pressing device 73 slides downward, the chopstick pressing device 73 presses the hinge plate 712, so that the hinge plate 712 is pushed to turn over downward, and the chopsticks placed on the hinge plate 712 drop from the chopstick dispensing opening 711, thereby implementing automatic chopstick dispensing. The structure is simple. After the chopsticks are dispensed, when the chopstick pressing device 73 slides upward, the chopstick pressing device 73 and the hinge plate 712 are separated. When no force is applied to the hinge plate 712, the hinge plate 712 is reset by using the reset torsion spring. When chopsticks need to be dispensed again, only the foregoing actions need to be repeated.

A limiting plate 75 is disposed above a position, close to the chopstick dispensing opening 711, on a bottom wall of the chopstick box 71. The spacing between the limiting plate 75 and the bottom wall of the chopstick box 71 is greater than the diameter of a chopstick, and the spacing should not exceed 1.5 times of the diameter of the chopsticks. Otherwise, chopsticks are easily stuck between the limiting plate 75 and the bottom wall of the chopstick box 71 in the conveying process. An opening groove used for the chopstick pressing device 73 to slide is provided on a side, close to the chopstick dispensing opening 711, of the limiting plate 75.

The chopstick pressing device 73 comprises a press block 731. A chopstick push rod 732 is provided at an upper portion of the press block 731. The chopstick push rod 732 is threaded to the press block 731. This can facilitate adjustment of the position of the chopstick push rod 732. A sliding portion is separately provided on left and right side walls of the press block 731. The sliding portion slidably fits the track. The press block 731 abuts one end of a reset spring by using the sliding portion. The other end of the reset spring abuts the bottom portion of the chopstick pressing track 74. To facilitate positioning of the reset spring, the reset spring is placed in the chopstick pressing track 74. The chopstick pressing track 74 may be formed by alternately disposing a column perpendicular to the limiting plate 75 and the front side plate. The sliding portion is placed in a spacing between the column of the limiting plate 75 and the front side plate. One end of the reset spring abuts the limiting plate 75, and the other end of the reset spring abuts the sliding portion.

The chopstick conveying device 72 comprises a timing belt and a drive motor. A primary timing pulley and a secondary timing pulley are provided on the timing belt. The primary timing pulley and the secondary timing pulley tighten the timing belt, and both the primary timing pulley and the secondary timing pulley are rotatably connected to the left and right side plates by using the rotating shaft. The primary timing pulley and the secondary timing pulley are on a same horizontal plane. An output shaft of the drive motor is connected to the primary timing pulley. An upper end surface of the timing belt and the bottom wall of the chopstick box 71 are on a same horizontal plane. The drive motor is controlled to rotate clockwise or counterclockwise, to implement chopstick delivery and chopstick arrangement.

A slope plate 76 is provided on a side of the bottom wall, away from the chopstick dispensing opening 711, of the chopstick box 71. A side of the slope plate 76 is connected to a rear side wall of the chopstick box 71. The other side slopes downward and toward the timing belt. The sloping angle may be 25 degrees to 45 degrees, and is preferably 35 degrees. In this way, chopsticks can be easily placed in the chopstick box 71. To prevent the chopsticks from dropping, the slope plate 76 abuts an end surface of the timing belt. When chopsticks need to be placed, the chopsticks may be placed on the slope plate 76 first, so that the chopsticks are sequentially conveyed forward. In addition, because the slope plate 76 is disposed, it is also avoided that some chopsticks are placed in the corner of the chopstick box 71 and cannot be conveyed forward.

To ensure that a customer takes a bowl and chopsticks safely, safety light curtains are mounted on two sides of the bowl delivery bin 63. The bowl delivery bin 63 drops and is reset (that is, a safety door is closed) only after the customer takes away the bowl and chopsticks. In a process in which the safety door is not completely closed, if a foreign object enters, the safety door can also stop closing immediately under the effect of the safety light curtains. In this way, the customer is prevented from being injured by pinching and the machine is prevented from being damaged, thereby ensuring safety of the customer and the machine.

A mechanism for measuring and providing soup, oil, and boiled water is further provided in the intelligent food cooking machine of the present invention. The mechanism is a group of measuring pumps. The measuring pumps are sequentially mounted in the frame 1, and are correspondingly connected to related pipes. These pipes are connected to the liquid conveying tube 55, so as to add and pour a specified amount of soup, oil, boiled water, and other required liquid. The boiled water may be provided by connecting a water outlet of a purified water tank and a water inlet of an instantaneous water heater.

In the embodiment of the present invention, a structural principle of screw-rod transmission is used in all the delivery drive device 62, the heating drive device 522, and the bowl fetching drive component 3224, which have similar structures.

The working process is as follows: A customer performs an optional operation on the intelligent food cooking machine by using the operation panel. After a coin is inserted into the coin device through the coin slot, the change is returned through the change return slot. Because bowls are stored in the bowl storage mechanism 2, a bowl is separated and fetched from the bowls in the bowl storage mechanism 2 by using the separation and fetching mechanism 3. The bowl is on the bowl tray 323 of the bowl fetching arm 321 of the bowl fetching mechanism 32. The bowl tray 323 moves down to sequentially pass through the bowl drop hole 211 and the bowl separation cylinder 311. When the bowl is placed in the lower stop position of the separation and fetching mechanism 3, the push mechanical hand 41 of the push mechanism 4 pushes the bowl and places the bowl on the sealing tray 521 in the heating lifting device 52 right below the microwave housing 51. The heating lifting device 52 sends the bowl on the sealing tray 521 to the microwave housing 51 for heating processing. After the bowl is heated, the push mechanical hand 41 of the push mechanism 4 pushes the bowl to the bowl delivery bin 63 in the delivery lifting mechanism 6 again. The push mechanical hand 41 immediately exits and is reset. The bowl delivery bin 63 moves upward to the bowl dispenser opening 14 under the effect of the delivery push rod 61. Because the automatic chopstick dispenser mechanism 7 is provided on the bowl delivery bin 63, in the rising process, the bowl delivery bin 63 drives the automatic chopstick dispenser mechanism 7 to automatically drop chopsticks. The customer takes the bowl and the chopsticks through the bowl dispenser opening 14. In this way, a whole process of intelligent heating and selling is implemented.

The foregoing descriptions are merely preferred implementations of the present invention. The protection scope of the present invention is not limited to the foregoing embodiment. Technical solutions belonging to the ideas of the present invention all fall with the protection scope of the present invention. It should be noted that, all improvements and modifications made by a person or ordinary skill in the technical field without departing from the principle of the present invention should also be considered as falling within the protection scope of the present invention.

## Claims

1. An intelligent food cooking machine, comprising a frame, a bowl dispenser opening, a coin slot, a change return slot, and an operation panel being disposed on a panel of the frame, a coin device and a change return device being disposed in the frame, and a refrigerator being disposed above the frame, wherein a bowl storage mechanism for storing bowls is disposed in the refrigerator, a separation and fetching mechanism for separating and fetching a bowl is disposed below the bowl storage mechanism, a push mechanism for pushing a bowl is disposed on a side of a lower stop position of the separation and fetching mechanism, a microwave heating mechanism for heating a bowl is disposed in a pushing direction of the push mechanism, a delivery lifting mechanism is disposed on a side, facing the bowl dispenser opening, of the microwave heating mechanism, and the delivery lifting mechanism delivers a heated bowl to the bowl dispenser opening.

2. The intelligent food cooking machine according to claim 1, wherein the bowl storage mechanism comprises a large wheel disc and a wheel disc drive device for driving the large wheel disc to rotate, a rotating shaft is disposed in the central position of the large wheel disc, a plurality of bowl drop holes is circumferentially and evenly distributed on the large wheel disc near the edge, a storage unit for storing bowls is disposed right above each bowl drop hole, the hole diameter of the bowl drop hole is greater than the diameter of a bowl cover, and the separation and fetching mechanism is located right below the bowl drop hole.

3. The intelligent food cooking machine according to claim 2, wherein the storage unit comprises a movable rod and a plurality of positioning rods, the movable rod and the positioning rods are circumferentially and evenly distributed along edges of the bowl drop holes, a starting track is disposed between the movable rod and a neighboring positioning rod, and the movable rod can approach the positioning rod along the starting track.

4. The intelligent food cooking machine according to claim 3, wherein the wheel disc drive device comprises a small wheel disc and a wheel disc drive motor, an output shaft of the wheel disc drive motor is linked to the small wheel disc, the small wheel disc is placed on a side of the large wheel disc, and teeth engaging each other are provided on outer side walls of both the small wheel disc and the large wheel disc.

5. The intelligent food cooking machine according to claim 1, wherein an ultraviolet germicidal lamp and an illuminating lamp are further mounted in the refrigerator, and the ultraviolet germicidal lamp and the illuminating lamp are placed on a side of the bowl storage mechanism.

6. The intelligent food cooking machine according to claim 1, wherein the separation and fetching mechanism comprises a bowl separation mechanism and a bowl fetching mechanism, and the bowl fetching mechanism is located right below the bowl separation mechanism;
the bowl separation mechanism comprises a bowl separation cylinder, and the bowl separation cylinder is located right below the bowl drop hole;
a plurality of bowl separation forks and a plurality of bowl separation fork seats for mounting the bowl separation forks are circumferentially and evenly distributed on an outer side wall of the bowl separation cylinder; the bowl separation fork is hingedly connected to the bowl separation fork seat, an upper clamping opening and a lower clamping opening are separately provided in positions on a cylinder wall of the bowl separation cylinder that correspond to the bowl separation fork, and the upper clamping opening and the lower clamping opening respectively fit upper and lower portions of the bowl separation fork; and
the bowl fetching mechanism comprises a bowl fetching arm and a bowl fetching lifting device for driving the bowl fetching arm to move up and down, a bowl tray fitting the bowl separation cylinder is provided on the bowl fetching arm, when the bowl tray moves upward, an outer edge of the bowl tray presses the upper portion of the bowl separation fork, so that the upper portion of the bowl separation fork sways outward, passes through the upper clamping opening, and is placed outside the bowl separation cylinder, and when the bowl tray moves downward, the outer edge of the bowl tray presses the lower portion of the bowl separation fork, so that the lower portion of the bowl separation fork sways outward, passes through the lower clamping opening, and is placed outside the bowl separation cylinder, so that the upper portion of the bowl separation fork sways inward, passes through the upper clamping opening, and is placed inside the bowl separation cylinder.

7. The intelligent food cooking machine according to claim 6, wherein a sealing plate for sealing a lower end opening of the bowl separation cylinder is disposed at an interval below the bowl tray.

8. The intelligent food cooking machine according to claim 6, wherein magnet members are separately provided at upper and lower ends of the bowl separation fork seat, the two magnet members respectively correspond to the upper and lower portions of the bowl separation fork, and during swaying of the bowl separation fork, the bowl separation fork and the magnet members can attract and stick to each other.

9. The intelligent food cooking machine according to claim 6, wherein a clamping groove for clamping a bowl and an upper slanted surface fitting a pressing action of the bowl tray are provided at the upper portion of the bowl separation fork, a lower slanted surface fitting the pressing action of the bowl tray is provided at the lower portion of the bowl separation fork, and the upper slanted surface and the lower slanted surface are disposed facing each other.

10. The intelligent food cooking machine according to claim 6, wherein the bowl fetching lifting device comprises a mounting seat, a bowl fetching sliding block, and a bowl fetching lifting track used for the bowl fetching sliding block to move up and down, a bowl fetching drive component for driving the bowl fetching sliding block to move up and down is further provided on the mounting seat, the bowl fetching drive component comprises a bowl fetching screw rod and a bowl fetching drive motor for driving the bowl fetching screw rod to rotate, a screw nut is sleeved on the bowl fetching screw rod, and the screw nut is fixedly connected to the bowl fetching sliding block.

11. The intelligent food cooking machine according to claim 1, wherein the push mechanism comprises a push mechanical hand, a linear push slide, and a push drive motor for driving the push mechanical hand to slide along the linear push slide, and the linear push slide is disposed on a side of the separation and fetching mechanism and the microwave heating mechanism.

12. The intelligent food cooking machine according to claim 1, wherein the microwave heating mechanism comprises a microwave housing, a heating lifting device, and a microwave heating component, the microwave housing comprises a housing and a sealing cover plate located below the housing, a round hole whose diameter is greater than the diameter of a bowl cover is provided at the center of the sealing cover plate, the heating lifting device is disposed right below the round hole, and the microwave heating component is located on an upper top end portion of the microwave housing; and the heating lifting device comprises a sealing tray for placing a bowl and a heating drive device for driving the sealing tray to move up and down, wherein the diameter of the sealing tray is greater than the diameter of the round hole, when the heating drive device delivers a bowl on the sealing tray to the microwave housing for heating processing, the round hole of the sealing cover plate and an end surface of the sealing tray are pressed and sealed, and the bowl is placed in the microwave housing.

13. The intelligent food cooking machine according to claim 12, wherein the heating drive device comprises a heating slider, a heating lifting track used for the heating slider to slide up and down, a heating screw rod, and a heating drive motor for driving the heating screw rod to rotate, a threaded hole is provided at the heating slider, the heating slider is threaded to the heating screw rod through the threaded hole, and the heating slider is fixedly connected to the sealing tray.

14. The intelligent food cooking machine according to claim 12, wherein a positioning piece for aligning the center of the bowl is disposed in the housing, a liquid conveying tube for pouring soup, oil, and boiled water into the bowl is further disposed in the housing, the positioning piece has a conical tube-like structure, a large end opening of the positioning piece is disposed downward, and the diameter of the large end opening of the positioning piece is greater than the diameter of the bowl cover.

15. The intelligent food cooking machine according to claim 1, wherein the delivery lifting mechanism comprises a delivery push rod and a delivery drive device for driving the delivery push rod to move up and down, a bowl delivery bin for placing the bowl is disposed right above the delivery push rod, a delivery track used for the bowl delivery bin to slide is provided on an inner wall of the panel of the frame, and the delivery track extends to the bowl dispenser opening.

16. The intelligent food cooking machine according to claim 15, wherein an automatic chopstick dispenser mechanism is disposed above the bowl delivery bin, the automatic chopstick dispenser mechanism comprises a chopstick box, a chopstick conveying device is disposed in the chopstick box, a chopstick dispensing opening is provided on a bottom wall of the chopstick box, the chopstick dispensing opening is hingedly connected to a hinge plate, and a reset torsion spring for maintaining the hinge plate and the bottom wall of the chopstick box on a same horizontal plane is provided at the hinge plate;
a chopstick pressing device is disposed above the hinge plate, and a chopstick pressing track used for the chopstick pressing device to slide up and down is provided on a side wall of the chopstick box; and
chopsticks pass through the chopstick conveying device and are located between the chopstick pressing device and the hinge plate, when the chopstick pressing device slides downward, the chopstick pressing device presses the hinge plate so that the chopsticks drop from the chopstick dispensing opening, and when the chopstick pressing device slides upward, the chopstick pressing device and the hinge plate are separated, and the hinge plate is reset by using the reset torsion spring.

17. The intelligent food cooking machine according to claim 16, wherein the chopstick pressing device comprises a press block, a chopstick push rod is provided at an upper portion of the press block, a reset spring is separately provided on left and right side walls of the press block, and an end of the reset spring abuts a bottom portion of the track.

18. The intelligent food cooking machine according to claim 16, wherein the chopstick conveying device comprises a timing belt and a drive motor, a primary timing pulley and a secondary timing pulley are provided on the timing belt, an output shaft of the drive motor is connected to the primary timing pulley, and an upper end surface of the timing belt and the bottom wall of the chopstick box are on a same horizontal plane.
